# EUROPÄISCHE PATENTSCHRIFT

(11) **EP 2 785 989 B1**
(45) Veröffentlichungstag und Bekanntmachung des Hinweises auf die Patenterteilung: **14.12.2016**
(21) Anmeldenummer: 12770504.4
(22) Anmeldetag: 15.10.2012
(51) Int. Cl.: F01N 3/20, F01N 11/00, F01N 13/00

(54) **VERFAHREN ZUM BETRIEB EINER DOSIERVORRICHTUNG**
METHOD FOR OPERATING A METERING APPARATUS
PROCÉDÉ POUR FAIRE FONCTIONNER UN DISPOSITIF DE DOSAGE

(30) Priorität: 11.11.2011 DE 102011118214
(43) Veröffentlichungstag der Anmeldung: 08.10.2014
(73) Patentinhaber: Continental Automotive GmbH, 30165 Hannover (DE)
(72) Erfinder: BRÜCK, Rolf, 51429 Bergisch Gladbach (DE); HODGSON, Jan, 53840 Troisdorf (DE); BAUER, Peter, 53721 Siegburg (DE)
(86) Internationale Anmeldenummer: PCT/EP2012/070357
(87) Internationale Veröffentlichungsnummer: WO 2013/068201

(56) Entgegenhaltungen:
- WO-A1-2009/037327
- DE-A1-102008 062 058
- DE-A1-102008 064 606
- DE-A1-102009 000 061
- DE-A1-102010 049 071

## Beschreibung

Die Erfindung betrifft ein Verfahren zum Betrieb einer Dosiervorrichtung zur Zugabe eines Additivs zu einer Abgasbehandlungsvorrichtung. Insbesondere im Kraftfahrzeugbereich sind zur Reinigung der Abgase von Verbrennungskraftmaschinen Abgasbehandlungsvorrichtungen verbreitet, welchen ein (flüssiges) Additiv (Kraftstoff, Reduktionsmittel, etc.) zugeführt wird.

Ein besonders häufig durchgeführtes Abgasreinigungsverfahren ist das Verfahren der selektiven katalytischen Reduktion (SCR-Verfahren; SCR = selective catalytic reduction), bei welchem Stickstoffoxidverbindungen im Abgas mit Hilfe eines zuzugebenden Reduktionsmittels reduziert werden. Als Reduktionsmittel wird vielfach Ammoniak verwendet. Ammoniak wird in Kraftfahrzeugen normalerweise nicht direkt selbst bevorratet, sondern z. B. in Form einer Reduktionsmittelvorläuferlösung, welche zu Ammoniak (dem eigentlichen Reduktionsmittel) umgesetzt werden kann. Die Umsetzung kann thermisch durch die Aufheizung des Reduktionsmittelvorläufers (mit einem Heizer und/oder dem heißen Abgas) auf eine ausreichend hohe Temperatur oder hydrolytisch unter Einsatz eines Hydrolysekatalysators, der die Umsetzung katalysiert, geschehen. Außerdem kann die Umsetzung abgasextern in einem eigens dafür vorgesehenen Reaktor außerhalb der Abgasbehandlungsvorrichtung und/oder abgasintern in der Abgasbehandlungsvorrichtung erfolgen. Bei der abgasinternen Umsetzung wird die Reduktionsmittelvorläuferlösung dem Abgas direkt zugeführt und im Abgas rein thermisch oder hydrolytisch zu Ammoniak umgesetzt. Im Folgenden werden die Begriffe Reduktionsmittel und Reduktionsmittelvorläufer synonym füreinander verwendet.

Zur Zuführung des Reduktionsmittels in eine Abgasbehandlungsvorrichtung kann in einem Kraftfahrzeug eine Dosiervorrichtung vorgesehen sein. Diese Dosiervorrichtung fördert das Reduktionsmittel aus einem Tank in die Abgasbehandlungsvorrichtung, insbesondere stromauf eines Mischers und/oder katalytischen Konverters in der Abgasleitung. Eine Dosiervorrichtung umfasst z. B. eine Förderpumpe, mit welcher das Reduktionsmittel gefördert wird, sowie ein Dosiermittel, welches zur Dosierung des Reduktionsmittels in die Abgasbehandlungsvorrichtung dient. Das Dosiermittel kann als Injektor ausgeführt sein, welcher geöffnet und geschlossen werden kann. Ebenso kann eine Dosiervorrichtung auch eine Dosierpumpe aufweisen, welche sowohl die Förderung des Reduktionsmittels als auch die Dosierung des Reduktionsmittels übernimmt. Es sind auch Dosiervorrichtungen bekannt, welche sowohl eine Dosierpumpe als auch ein zusätzliches Dosiermittel in Form eines Injektors/Ventils aufweisen.

Insbesondere für den Kraftfahrzeugbereich ist es aufgrund hoher Stückzahlen erforderlich, dass die Dosiervorrichtung und ein zugehöriger Additivtank zur Entnahme des Additivs besonders robust und vor allem kostengünstig sind. Dementsprechend besteht ein großes Interesse daran, besonders kostengünstige Komponenten, wie Pumpen, Injektoren und Leitungen für die Dosiervorrichtung verwenden zu können.

Gleichzeitig sollte die Dosiergenauigkeit der Dosiervorrichtung möglichst groß sein, um der Abgasbehandlungsvorrichtung einerseits immer ausreichend Reduktionsmittel zur Verfügung stellen zu können und andererseits den Verbrauch an Reduktionsmittel möglichst gering zu halten.

Die DE 10 2009 000 061 A1 betrifft ein Verfahren zur Zugabe eines Reagenzmittels in eine Abgasleitung mit Hilfe einer Dosiervorrichtung. Gemäß der Schrift erfolgt eine Ansteuerung einer Dosierpumpe in Abhängigkeit eines bestimmten Massenstroms an Reagenzmittels durch eine Reagenzmittelleitung.

Die WO 2009/037327 A1 betrifft ein Verfahren zur Adaption der Zufuhr von Reduktionsmittel zu einem Abgasnachbehandlungssystem, bei welchem die Öffnungszeit einer Reduktionsmittelzuführeinrichtung schrittweise erhöht wird bis Reduktionsmittel von einem Sensor im Abgassystem registriert wird.

Die DE 10 2008 064 606 A1 betrifft eine Funktionsanpassung einer Abgasreinigungsvorrichtung zur Reinigung eines Abgasstroms einer Verbrennungskraftmaschine, bei der eine Zudosierung eines Reduktionsmittels in einen Abgasstroms erfolgt und ein Zusammenhang zwischen dem zudosierten Reduktionsmittel und einem Messsignal eines Stickstoffoxidsensors angepasst wird.

Die DE 10 2008 062 058 A1 beschreibt ein Verfahren zum Betreiben einer Brennkraftmaschine bei dem die Zugabemenge des Reduktionsmittels in Abhängigkeit von einer aktuell erfassten Gesamtlaufleistung der Brennkraftmaschine vorgegeben und/oder adaptiert wird. Dabei wird die Zugabemenge des Reduktionsmittels zusätzlich in Abhängigkeit vom Alterungsgrad des Abgasnachbehandlungselementes, insbesondere eines NOX-Speicherkatalysators oder eines SCR-Katalysators, vorgegeben und/oder adaptiert.

Hiervon ausgehend ist es Aufgabe der hier vorliegenden Erfindung, die im Zusammenhang mit dem Stand der Technik geschilderten technischen Probleme zu lindern. Es soll insbesondere ein besonders vorteilhaftes Verfahren zum Betrieb einer Dosiervorrichtung beschrieben werden, mit welchem eine besonders hohe Dosiergenauigkeit erreicht werden kann. Es ist auch eine Aufgabe, die Störanfälligkeit und Komplexität solcher Dosierverfahren weiter zu reduzieren. Ebenso ist gewünscht, dass dieses Verfahren auf unterschiedliche Ausgestaltungen der Dosiervorrichtung anwendbar ist und ggf. auch über die Betriebsdauer eintretende Veränderungen berücksichtigt bzw. daran einfach angepasst werden kann.

Diese Aufgaben werden gelöst mit einem Verfahren gemäß den Merkmalen des Patentanspruchs 1. Weitere vorteilhafte Ausgestaltungen des Verfahrens sind in den abhängig formulierten Patentansprüchen angegeben. Die Beschreibung, insbesondere im Zusammenhang mit den Figuren, erläutert die Erfindung, wobei weitere Ausführungsvarianten der Erfindung aufgezeigt werden.

Demnach wird ein Verfahren zum Betrieb einer Dosiervorrichtung zur Zugabe eines Additivs hin zu einer Abgasbehandlungsvorrichtung vorgeschlagen, welches zumindest die folgenden Schritte umfasst:
a) Bestimmen einer von einer der Abgasbehandlungsvorrichtung geforderten Dosiermenge des Additivs;
b) Bestimmen einer Betriebsweise zur Zuführung der geforderten Dosiermenge al für die Dosiervorrichtung, wobei zumindest folgende Teilschritte durchgeführt werden:
   b.1) Bestimmen mindestens eines Betriebskennwertes mindestens einer Komponente der Dosiervorrichtung, welcher für eine Alterung der Dosiervorrichtung (1) maßgeblich ist;
   b.2) Festlegen einer Betriebsweise für die Dosiervorrichtung in Abhängigkeit des Betriebskennwertes aus Schritt b.1);
c) Betreiben der Dosiervorrichtung mit der festgelegten Betriebsweise, so dass die gemäß Schritt a) geforderte Dosiermenge der Abgasbehandlungsvorrichtung zugeführt wird.
   Die Dosiervorrichtung weist zur Förderung des Additivs insbesondere eine Pumpe auf. Die Pumpe kann entweder eine reine Förderpumpe sein, welche lediglich eine Förderfunktion übernimmt, oder eine Dosierpumpe, welche sowohl der Förderung des Reduktionsmittels dient als auch eine genaue Dosierung vornimmt. Der Begriff Dosierung meint hier insbesondere die (portionierte) Zuführung der geforderten Dosiermenge in Schritt c). Wenn die Pumpe eine reine Förderpumpe ist, weist die Dosiervorrichtung regelmäßig ein zusätzliches Dosiermittel auf, welches die Dosierung übernimmt. Das Dosiermittel kann beispielsweise ein Injektor oder ein Ventil sein. Die Förderpumpe stellt dann ein unter Druck stehendes Additiv zur Verfügung. Über die Öffnungszeit des Dosiermittels, kann die Vorgabe der Dosiermenge in Schritt c) erfolgen. Wenn die Dosiervorrichtung eine Dosierpumpe umfasst, ist zur Dosierung kein zusätzliches Dosiermittel notwendig. Beispielsweise kann dann statt einem Injektor ein passives oder selbstöffnendes Einspritzventil verwendet werden.

Zur Durchführung des Verfahrens kann z. B. eine separate Kontrolleinheit vorgesehen sein. Wenn das Verfahren in einem Kraftfahrzeug zur Bereitstellung eines Additivs in einer Abgasbehandlungsvorrichtung durchgeführt wird, kann das Verfahren gegebenenfalls auch von dem Motorsteuergerät das Kraftfahrzeuges ausgeführt werden. In einer Dosiervorrichtung kann auch eine Kontrolleinheit zur Durchführung des Verfahrens vorgesehen sein.

Mit einem Additiv ist insbesondere ein Reduktionsmittel gemeint. Ganz besonders bevorzugt betrifft das Verfahren die Zugabe einer Reduktionsmittellösung, wie insbesondere Harnstoff oder AdBlue^{®} (wasserklare, synthetisch hergestellte 32,5-prozentige Lösung von hochreinem Harnstoff in demineralisiertem Wasser).

Die geforderte Dosiermenge repräsentiert die in der Abgasbehandlungsvorrichtung zu einem vorbestimmten Zeitpunkt benötigte Menge des Additivs, um eine gewünschte Reaktion zu erzielen. Die geforderte Dosiermenge ist insbesondere eine Mengenvorgabe von einer Kontrolleinheit für die Dosiervorrichtung. Die geforderte Dosiermenge wird typischerweise von der Kontrolleinheit in Abhängigkeit von verschiedenen Betriebsparametern der Abgasbehandlungsvorrichtung, der Verbrennungskraftmaschine, an welche die Abgasbehandlungsvorrichtung angeschlossen ist und/oder eines Kraftfahrzeuges (aufweisend die Abgasbehandlungsvorrichtung und die Verbrennungskraftmaschine) festgelegt. Mit der geforderten Dosiermenge der Abgasbehandlungsvorrichtung ist regelmäßig die Menge an Additiv gemeint, die zur effektiven Durchführung eines Abgasreinigungsverfahrens in der Abgasbehandlungsvorrichtung erforderlich ist. Die geforderte Dosiermenge kann z. B. aufgrund aktueller Messwerte und/oder Betriebsweisen der Verbrennungskraftmaschine bzw. der Abgasbehandlungsvorrichtung berechnet und/oder aus einem Datenspeicher (Kennfeld) ausgewählt werden.

In besonderen Betriebssituationen der Dosiervorrichtung ist es allerdings auch möglich, dass andere Einflussgrößen die geforderte Dosiermenge beeinflussen. Beispielsweise kann die geforderte Dosiermenge begrenzt werden, wenn in einem Tank, aus welchem die Dosiervorrichtung das Additiv fördert, nur noch eine begrenzte Menge an Additiv zur Verfügung steht. Es ist ebenso möglich, dass die geforderte Dosiermenge begrenzt wird, wenn eine höhere Dosiermenge die maximale Förderfähigkeit der Dosiervorrichtung überschreiten würde.

Die in Schritt b) zu bestimmende Betriebsweise für die Dosiervorrichtung beinhaltet bevorzugt einen Betriebsalgorithmus, nach dem die Dosiervorrichtung betrieben wird, um die geforderte Dosiermenge in die Abgasbehandlungsvorrichtung bereitzustellen. Der Betriebsalgorithmus umfasst wiederum zumindest eine Betriebsfunktion, die eine bestimmte Einzelheit der Betriebsweise (Teilprozess) festlegt. Der Betriebsalgorithmus mit seinen Betriebsfunktionen kann in der Kontrolleinheit hinterlegt sein, die zur Durchführung des Verfahrens eingerichtet ist. Wenn zur Dosierung in der Dosiervorrichtung ein Dosiermittel (beispielsweise ein Injektor) zum Einsatz kommt, kann die Betriebsweise beispielsweise eine Betriebsfunktion aufweisen, welche einen Zusammenhang zwischen einer Ansteuerung des Dosiermittels und der geforderten Dosiermenge in Abhängigkeit von zumindest einem Betriebsparameter definiert. In dem Fall, dass für die Dosierung eine Dosierpumpe verwendet wird, umfasst die Betriebsweise beispielsweise eine Betriebsfunktion, welche einen Zusammenhang zwischen der geforderten Dosiermenge und einer Ansteuerung der Dosierpumpe in Abhängigkeit von zumindest einem Betriebsparameter definiert.

Zur Bestimmung der Betriebsweise wird in Schritt b.1) zunächst ein Betriebskennwert mindestens einer Komponente der Dosiervorrichtung bestimmt. Der Begriff "Betriebskennwert" bezeichnet eine Eigenschaft einer Komponente der Dosiervorrichtung, welche für die von der Dosiervorrichtung geförderte Menge an Reduktionsmittel bzw. die von der Dosiervorrichtung dosierte Menge an Fluid wesentlich ist. Der Betriebskennwert repräsentiert die Alterung der Dosiervorrichtung. Die unter gleichen Betriebsparametern der Dosiervorrichtung dosierten Mengen an Additiv variieren, weil die Dosiervorrichtung altert. Beispielweise verändert sich das Verhalten von Ventilen und Pumpen in Dosiervorrichtungen durch die Alterung. Daher ist es vorteilhaft, die Alterung der Dosiervorrichtung mit einem repräsentativen Betriebskennwert zu berücksichtigen. Mit einem Betriebskennwert ist hier insbesondere eine Eigenschaft der Dosiervorrichtung gemeint, die sich allenfalls langsam über die gesamte Lebensdauer der Dosiervorrichtung hin ändert. Insbesondere ist keine Eigenschaft gemeint, die möglicherweise kurzfristig schwankt, wie beispielsweise die Temperatur der Dosiervorrichtung. Der Betriebskennwert kann auch eine berechnete Größe sein, in welche verschiedene Einflussgrößen des Betriebs der Dosiervorrichtung hinein wirken.

Das Festlegen einer Betriebsweise für die Dosiervorrichtung soll dann in Abhängigkeit wenigstens eines der obigen Betriebskennwerte erfolgen, so dass demnach insbesondere eine dem Alter der Dosiervorrichtung zugeordnete Betriebsweise der Dosiervorrichtung erfolgt. Damit können zum Beispiel bekannte und/oder prognostizierbare und/oder messbare Änderungen des Dosierverhaltens der Komponenten der Dosiervorrichtung kompensiert werden. Soweit eine entsprechende Kompensation erforderlich ist, kann das Betreiben der Dosiervorrichtung mit der entsprechend geeigneten festgelegten Betriebsweise erfolgen, so dass exakt die geforderte Dosiermenge der Abgasbehandlungsvorrichtung zugeführt wird.

Auf diese Weise ist es insbesondere möglich, dass das Verfahren über die Betriebsdauer der Dosiervorrichtung zu vorgegebenen Zeitpunkten und/oder nach vorgegebenen Intervallen kalibriert wird, wobei die Alterung der Dosiervorrichtung und/oder der Abgasbehandlungsvorrichtung mit einbezogen wird. Dies erlaubt auch noch im hohen Alter der Dosiervorrichtung eine besonders exakte Zugabe und damit einen effizienten Betrieb der Abgasbehandlungsvorrichtung. Dabei ist besonders vorteilhaft, dass diese Kalibrierung selbstständig bzw. automatisch erfolgt, so dass die Wartung der Dosiervorrichtung vereinfacht werden kann.

Besonders vorteilhaft ist das Verfahren, wenn für den Betriebskennwert in Schritt b.1) zumindest einer der folgenden für die Alterung der Dosiervorrichtung relevanten Parameter berücksichtigt wird:
- Anzahl der bislang erfolgten Dosiervorgänge,
- Alter der Dosiervorrichtung, und
- bisherige Betriebszeit der Dosiervorrichtung.

Vorzugsweise werden die genannten Parameter jeweils gewichtet berücksichtigt. Mit einer gewichteten Berücksichtigung ist hier gemeint, dass die Parameter jeweils mit einem Faktor multipliziert oder mit einem Exponenten potenziert werden, um die Auswirkung des Parameters auf den Betriebskennwert zu berücksichtigen.

Gemäß dem hier beschriebenen Verfahren werden für den Betriebskennwert die Anzahl der bislang erfolgten Dosiervorgänge, das Alter der Dosiervorrichtung und/oder die bisherige Betriebszeit der Dosiervorrichtung betrachtet. All diesen drei verschiedenen Parametern ist gemeinsam, dass sie ein Maß für die Lebensdauer der Dosiervorrichtung repräsentieren.

Die Anzahl der bislang erfolgten Dosiervorgänge kann durch unterschiedliche Verfahrensschritte charakterisiert sein. Wenn zur Dosierung als Dosiermittel ein Injektor verwendet wird, kann die Anzahl der erfolgten Dosiervorgänge bspw. jeweils um eins erhöht werden, wenn der Injektor einmal öffnet bzw. schließt. Wenn zur Dosierung eine Dosierpumpe verwendet wird, kann die Anzahl beispielsweise jeweils dann um eins erhöht werden, wenn ein Signal zur Anforderung einer Dosiermenge an Additiv von einer Kontrolleinheit für die Abgasbehandlungsvorrichtung angefordert wird. Wenn die Dosierpumpe einen Rotationsantrieb aufweist, kann die Anzahl der bislang erfolgten Dosiervorgänge aus der Anzahl der Umdrehungen des Rotationsantriebs bestimmt werden. Dabei kann die Anzahl an Dosiervorgängen als Produkt aus einem (gespeicherten) Mittelwert der Dosiervorgänge pro Umdrehung und die Anzahl der Umdrehungen berechnet werden. Die Anzahl der bislang erfolgten Dosiervorgänge wird folglich registriert und nachgehalten, z. B. indem ein entsprechender Zähler von der Kontrolleinheit erhöht und gespeichert wird. So werden die Dosiervorgänge insbesondere ab dem Zeitpunkt nach der Installation der Komponenten kontinuierlich nachverfolgt.

Mit dem Alter der Dosiervorrichtung ist beispielsweise der Zeitraum seit einer ersten Inbetriebnahme der Dosiervorrichtung gemeint. Dieser Zeitraum kann von einer Kontrolleinheit aus dem aktuellen Datum und einem in einem Speicher hinterlegten Datum der ersten Inbetriebnahme berechnet werden.

Die bisherige Betriebszeit der Dosiervorrichtung kann beispielsweise durch Aufsummierung der Betriebszeitabschnitte berechnet werden, in welchen die Dosiervorrichtung in Betrieb war. Hierbei kann wahlweise die tatsächliche Zeit, während der der Abgasbehandlungsvorrichtung Additiv zugeführt wurde, oder die Gesamtzeit während der die Dosiervorrichtung zur Bereitstellung von Additiv aktiv zur Verfügung stand, herangezogen werden.

Das beschriebene Verfahren ist auch vorteilhaft, wenn für den Betriebskennwert in Schritt b.1) zumindest eine Anzahl des Auftretens der folgenden für die Alterung der Dosiervorrichtung relevanten Ereignisse berücksichtigt wird:
- Anzahl von Einfriervorgängen, denen die Dosiervorrichtung ausgesetzt war;
- Anzahl von Notabschaltungen der Dosiervorrichtung;
- Anzahl von Heißabstellvorgängen einer an die Abgasbehandlungsvorrichtung angeschlossenen Verbrennungskraftmaschine;
- Anzahl an Fehlbetankungen eines Tanks, aus welchem die Dosiervorrichtung das Additiv entnimmt; und
- Anzahl an Phasen, in denen die Dosiervorrichtung für länger als ein vorgegebenes Zeitintervall deaktiviert war.

Die beschriebenen Ereignisse können die Alterung der Dosiervorrichtung maßgeblich beeinflussen. Daher beeinflussen diese Ereignisse auch die Dosiermenge, welche von der Dosiervorrichtung bei bestimmten Betriebsparametern abgegeben wird. Es wird hier insbesondere vorgeschlagen, für den Betriebskennwert in Schritt b.1) zu berücksichtigen, wie oft die beschriebenen relevanten Ereignisse (Anzahl des Auftretens) seit einer ersten Inbetriebnahme oder Herstellung der Dosiervorrichtung an der Dosiervorrichtung aufgetreten sind.

Durch Einfriervorgänge können flüssigkeitsleitende Komponenten der Dosiervorrichtung (insbesondere Kanäle, Ventile und/oder Pumpen) dauerhaft verändert werden. Beispielsweise verformen sich Kanäle gegebenenfalls irreversibel unter Wirkung des beim Einfrieren auftretenden Eisdrucks. Dies führt gegebenenfalls zu einer Veränderung der dosierten Menge an Additiv, auch wenn keine Beschädigung der Dosiervorrichtung bzw. der Kanäle auftritt. Durch Notabschaltungen der Dosiervorrichtung können insbesondere an Komponenten mit beweglichen Teilen (wie beispielsweise einer Pumpe und/oder einem Ventil) Alterungserscheinungen auftreten. Bei Heißabstellvorgängen wird eine an die Abgasbehandlungsvorrichtung angeschlossene Verbrennungskraftmaschine zunächst mit hoher Last betrieben, so dass eine hohe Abgastemperatur auftritt. Dann wird die Verbrennungskraftmaschine plötzlich gestoppt. Die Abgasbehandlungsvorrichtung kühlt dann schnell ab, so dass sehr große Temperaturgradienten in der Abgasbehandlungsvorrichtung auftreten. Heißabstellvorgänge wirken sich insbesondere auf eine Einspritzvorrichtung einer Dosiervorrichtung und auf Ventile in dieser Einspritzvorrichtung aus, weil die Einspritzvorrichtung besonders nah an der Abgasbehandlungsvorrichtung angeordnet ist. Bei Fehlbetankungen gelangt ein ungeeignetes (für den Betrieb der Dosiervorrichtung nicht vorgesehenes) Fluid in einen Tank für das Additiv. Beispielweise wird ein für Harnstoff-Wasser-Lösung vorgesehener Additivtank mit Kraftstoff befüllt. Der Kraftstoff gelangt dann in die Dosiervorrichtung und verändert das Strömungsverhalten für das Additiv durch Leitungen und Ventile. Diese Veränderung kann irreversibel sein und so die dosierte Menge an Additiv beeinflussen. Längere Stillstandsphasen können beispielsweise durch ein Zeitintervall von mehr als zwei Wochen, mehr als einem Monat oder mehr als drei Monaten gekennzeichnet sein. In solchen Stillstandsphasen können sich Ablagerungen in den Leitungen der Dosiervorrichtung bilden, insbesondere, wenn die Kanäle der Dosiervorrichtung während der Stillstandsphase mit dem Additiv gefüllt sind. Wenn das Additiv Harnstoff-Wasser-Lösung ist, können sich beispielsweise kristalline Ausscheidungen bilden. Diese Ausscheidungen können die Komponenten der Dosiervorrichtung beeinflussen. Beispielsweise können die Oberflächen der Kanäle der Dosiervorrichtung durch die Bewegung der Ausscheidungen durch die Kanäle aufgerauht werden. So kann der Strömungswiderstand der Kanäle verändert werden. Auch dies verändert die dosierte Menge an Additiv.

Das beschriebene Verfahren ist darüber hinaus vorteilhaft, wenn für den Betriebskennwert in Schritt b.1) zumindest eine der folgenden Betriebsbedingungen berücksichtigt wird, welche während des Betriebs der Dosiervorrichtung (1) in zumindest einem vorgelagerten Zeitintervall vorlag:
- ein Lastbereich, in dem die Dosiervorrichtung (1) betrieben wurde;
- eine Temperatur, welche in der Dosiervorrichtung (1) vorlag.

Der Betrieb der Dosiervorrichtung wirkt sich auf die Alterung der Dosiervorrichtung unterschiedlich aus, je nachdem unter welchen Betriebsbedingungen die Dosiervorrichtung betrieben wird. Eine festgelegte Anzahl an Dosiervorgängen bedingt beispielsweise eine stärkere Alterung, wenn die Temperatur der Dosiervorrichtung (bzw. der angeschlossenen Abgasbehandlungsvorrichtung) erhöht ist und/oder die Dosiervorrichtung unter Vollast betrieben wird. Für den Betriebskennwert können in Schritt b.1) sämtliche in einer Kontrolleinheit zur Verfügung stehenden Betriebsparameter der Dosiervorrichtung als Betriebsbedingungen berücksichtigt werden. Mit einem vorgelagerten Zeitintervall ist insbesondere ein Zeitraum gemeint, der vor der Bestimmung des Betriebskennwerts der jeweiligen Durchführung des beschriebenen Verfahrens liegt. Vorzugsweise ist ein Zeitintervall gemeint, das zu einem Zeitpunkt vor der jeweiligen Durchführung des beschriebenen Verfahrens beginnt und mit der jeweiligen Durchführung des beschriebenen Verfahrens endet. Der Zeitpunkt kann beispielsweise der Zeitpunkt einer vorangegangenen Durchführung des erfindungsgemäßen Verfahrens sein.

Besonders vorteilhaft ist es, wenn wenigstens eine Betriebsbedingung in Kombination mit zumindest einem der weiter oben bereits angegebenen folgenden Parameter für den Betriebskennwert berücksichtigt wird:
- Anzahl der bislang erfolgten Dosiervorgänge,
- Alter der Dosiervorrichtung, und
- bisherige Betriebszeit der Dosiervorrichtung.
Einzelne Dosiervorgänge oder Gruppen von Dosiervorgängen, Zeitabschnitte der Alterung der Dosiervorrichtung oder Zeitabschnitte der Betriebszeit der Dosiervorrichtung können dann jeweils gemäß den vorliegenden Betriebsbedingungen gewichtet berücksichtigt werden.

Mit einer "gewichteten" Berücksichtigung ist hier gemeint, dass die genannten Parameter in Abhängigkeit der wenigstens einen Betriebsbedingung unterschiedlich stark mit in den Betriebskennwert einfließen. Besonders vorteilhaft ist es, wenn die Betriebsbedingungen der Dosiereinheit anhand der Betriebsparameter in ein Kategorisierungssystem von Betriebsbedingungskategorien eingeordnet werden und für jede Kategorie eine bestimmte Gewichtung der Parameter bzw. Ereignisse für den Betriebskennwert vorgenommen wird. Beispielsweise können die Kategorien: 1 (unkritisch), 2 (kritisch) und 3 (sehr kritisch) vorgesehen sein, wobei der normale Betrieb der Dosiervorrichtung in Kategorie (1) einsortiert wird, ein Betrieb unter Vollast in Kategorie (2) fällt und Kategorie (3) für außerordentliche, nicht vorgesehene Betriebsbedingungen (wie beispielsweise eine stark überhöhte Betriebstemperatur der Dosiervorrichtung) vorgesehen ist.

In einer weiteren bevorzugten Ausführungsform des Verfahrens wird in Schritt b.1) mindestens ein Betriebskennwert aus einem Speicher ausgelesen, wobei der mindestens eine Betriebskennwert im Speicher regelmäßig aktualisiert wird, wobei zumindest ein relevanter Parameter, zumindest ein relevantes Ereignis oder zumindest eine relevante Betriebsbedingung aus mindestens einem vorgelagerten Zeitintervall bei der Aktualisierung berücksichtigt wird.

Die genannten Parameter und/oder Ereignisse sind vorzugsweise für die Alterung der Dosiervorrichtung relevant und/oder repräsentativ. Ein Speicher kann beispielsweise in einem Steuergerät oder einer Kontrolleinheit vorgesehen sein, welche zur Durchführung des erfindungsgemäßen Verfahrens eingerichtet ist. Ein relevanter Parameter oder eine relevante Betriebsbedingung lag vorzugsweise in dem besagten Zeitintervall vor. Ein relevantes Ereignis ereignete sich vorzugsweise in dem besagten Zeitintervall. Beim Aktualisieren des hinterlegten Betriebswertes werden vorzugsweise jeweils relevante Parameter, Ereignisse oder Betriebsbedingungen ermittelt, die in einem vorgelagerten Zeitintervall zwischen der Aktualisierung und einer vorangegangenen, letzten Aktualisierung ermittelt wurden. So müssen nicht sämtliche für den Betriebskennwert berücksichtigten Parameter, Ereignisse und/oder Betriebsbedingungen dauerhaft protokolliert werden. Die Informationen hierüber können jeweils gelöscht werden, soweit sie in dem hinterlegten Betriebskennwert bereits Niederschlag gefunden haben bzw. soweit sie bei einer Aktualisierung des Betriebskennwertes bereits berücksichtigt wurden.

Gemäß einer Weiterbildung des Verfahrens ist vorgesehen, dass in Schritt a) bei der Bestimmung der Dosiermenge zumindest einer der folgenden Betriebsparameter der Abgasbehandlungsvorrichtung berücksichtigt wird:
- Abgastemperatur,
- Abgaszusammensetzung,
- Abgasmassenstrom,
- Aktivität eines Katalysators in der Abgasbehandlungsvorrichtung, und
- Beladung eines Partikelabscheiders in der Abgasbehandlungsvorrichtung.

Besonders bevorzugt ist, dass eine Mehrzahl dieser Betriebsparameter berücksichtigt wird, ggf. sogar alle Betriebsparameter. Diese Betriebsparameter können berechnet und/oder gemessen werden. Hierfür sollte die Bestimmung dieser Betriebsparameter insbesondere zeitnah zum Dosierzeitpunkt erfolgen, so dass eine für den Dosierzeitpunkt gut zutreffende Zustandsbeschreibung der Abgasbehandlungsvorrichtung möglich ist.

Die Abgastemperatur kann auch mittelbar über die Temperatur einer Komponente der Abgasbehandlungsvorrichtung bestimmt werden. Durch die Abgastemperatur wird bestimmt, ob das der Abgasbehandlungsvorrichtung zugeführte Additiv in der Abgasbehandlungsvorrichtung wirkungsvoll umgesetzt und genutzt werden kann. Daher kann die Abgastemperatur für die geforderte Dosiermenge berücksichtigt werden.

Die Abgaszusammensetzung (also z. B. die Anteile Stickoxide, Partikel, Sauerstoff, etc.) und/oder der Abgasmassenstrom kann auch aus der aktuellen Zugabe des Kraftstoff-Luft-Gemisches hin zur Verbrennungskraftmaschine bestimmt werden. Die Abgaszusammensetzung und der Abgasmassenstrom geben vor, wie viele umsetzbare Schadstoffe tatsächlich im Abgas vorliegen. Daher können die Abgaszusammensetzung und der Abgasmassenstrom zur Festlegung der Dosiermenge verwendet werden.

Als Maß für die Aktivität eines Katalysators können die Umgebungsbedingungen (z. B. Abgastemperatur, Abgaszusammensetzung, Abgasmassenstrom, Temperatur des Katalysators) und/oder seine Beschichtung berücksichtigt werden. Die Aktivität eines Katalysators zeigt an, wie viel schädliche Abgasbestandteile der Katalysator umsetzen kann. Die Zufuhr von mehr Additiv als die Aktivität des Katalysators zulässt, ist daher nicht sinnvoll. Dies definiert den Einfluss der Aktivität eines Katalysators auf die Dosiermenge.

Die Beladung eines Partikelabscheiders ist insbesondere ein Maß für die Menge der im Partikelabscheider aktuell gespeicherten Partikel (Ruß, etc.). Die Beladung eines Partikelabscheiders gibt an, zu wie viel Prozent der Partikelabscheider gefüllt ist. Wenn das zuzugebende Additiv dazu dient, Partikel in einem Partikelabscheider umzusetzen, kann die geforderte Dosiermenge in Abhängigkeit der Beladung eines Partikelabscheiders festgelegt werden.

Das beschriebene Verfahren ist auch besonders vorteilhaft, wenn in Schritt a) bei der Bestimmung der Dosiermenge zumindest einer der folgenden Betriebsparameter einer an die Abgasbehandlungsvorrichtung angeschlossenen Verbrennungskraftmaschine berücksichtigt wird:
- Drehmoment,
- Drehzahl,
- Leistungsabgabe, und
- Lambda-Wert.

Die Betriebsparameter Drehmoment, Drehzahl, Leistungsabgabe und Lambda-Wert einer Verbrennungskraftmaschine haben jeweils selbst einen Einfluss auf die weiter oben beschriebenen Betriebsparameter der Abgasbehandlungsvorrichtung und können daher alternativ oder zusätzlich ebenfalls zum Festlegen der Dosiermenge verwendet werden.

Die genannten Betriebsparameter haben einen Einfluss darauf, wie viel Additiv zur effektiven Umsetzung von Schadstoffbestandteilen im Abgas in der Abgasbehandlungsvorrichtung benötigt wird. Daher ist es vorteilhaft, die geforderte Dosiermenge an Additiv in Abhängigkeit von zumindest einem dieser Parameter zu bestimmen.

Das erfindungsgemäße Verfahren ist auch vorteilhaft, wenn in Schritt c) zumindest ein Betriebsparameter der Dosiervorrichtung aus der folgenden Gruppe berücksichtigt wird:
- Druck des Additivs in der Dosiervorrichtung,
- Füllstand in einem Tank der Dosiervorrichtung
- Temperatur der Dosiervorrichtung, und
- Vibration der Dosiervorrichtung.

Betriebsparameter der Dosiervorrichtung sind von den weiter oben beschriebenen Betriebskennwerten zu unterscheiden. Betriebsparameter können kurzfristigen Schwankungen im Betrieb unterliegen, während sich Betriebskennwerte regelmäßig nur sehr langsam bzw. langfristig ändern.

Diese angeführten Betriebsparameter beeinflussen die von der Dosiervorrichtung bereitgestellte Menge an Additiv neben dem in Schritt b) des Verfahrens berücksichtigten Betriebskennwerten. Im Gegensatz zu der in Schritt b) vorgenommenen, eher langfristigen Adaption der Betriebsweise der Dosiervorrichtung an Veränderungen der Dosiervorrichtung, erfolgt durch die Berücksichtigung der hier genannten Betriebsparameter eine kurzfristige Anpassung der Betriebsweise der Dosiervorrichtung an Quereinflüsse bzw. an Umgebungsbedingungen.

Besonders bevorzugt ist, dass eine Mehrzahl der Betriebsparameter der Dosiervorrichtung berücksichtigt wird, ggf. sogar alle Betriebsparameter. Diese Betriebsparameter können berechnet und/oder gemessen werden. Hierfür sollte die Bestimmung dieser Betriebsparameter insbesondere zeitnah zum Dosierzeitpunkt erfolgen, so dass eine für den Dosierzeitpunkt gut zutreffende Zustandsbeschreibung der Dosiervorrichtung möglich ist.

Der Druck des Additivs in der Dosiervorrichtung kann mit einem Drucksensor bestimmt werden, der mit dem Leitungssystem für das Additiv kommuniziert. Der Füllstand des Additivs im Tank kann mit einem Füllstandsensor bestimmt oder mit einer Kontrolleinheit berechnet werden. Eine für die Dosiervorrichtung bzw. das darin befindliche Additiv charakteristische Temperatur kann mit einem Temperatursensor bestimmt werden, der mit dem Tank und/oder dem Leitungssystem und/oder einer Komponente der Dosiervorrichtung gekoppelt ist. Vibrationen der Dosiervorrichtung können beispielsweise vom Betrieb einer Pumpe oder dergleichen abgeleitet werden.

Das Verfahren ist zudem vorteilhaft, wenn die in Schritt b.2) festgelegte Betriebsweise zumindest eine der folgenden Betriebsfunktionen umfasst, die den Betrieb einer Dosierpumpe oder eines Injektors definieren und die in Abhängigkeit der Betriebskennwerte beeinflusst werden:
- Ansteuerungsstromprofil für die Dosierpumpe;
- Ansteuerungsstromprofil für den Injektor;
- Ansteuerungsfrequenz für die Dosierpumpe, und
- Ansteuerungsfrequenz für den Injektor.

Der Injektor und die Dosierpumpe weisen normalerweise elektromagnetische Antriebsspulen auf. Wenn ein Strom durch diese Spulen fließt, wird eine elektromagnetische Kraft erzeugt, welche dafür sorgt, dass die Dosierpumpe eine Dosierbewegung und/oder Förderbewegung durchführt bzw. der Injektor eine Dosierbewegung durchführt bzw. öffnet. Je nachdem, wie das Ansteuerungsstromprofil der Förderpumpe und/oder des Injektors gestaltet ist, verändert sich die Reaktion der Förderpumpe bzw. des Injektors. Ein Ansteuerungsstromprofil kann beispielsweise zunächst auf einen hohen Öffnungsstrom-Wert schnell ansteigen, um einen Injektor schnell zu öffnen. Der Öffnungsstrom-Wert kann für ein definiertes Zeitintervall gehalten werden, um anschließend auf einen reduzierten Haltestrom-Wert abzufallen, um Energie einzusparen. Beispielsweise können der Öffnungsstrom-Wert, das definierte Zeitintervall und/oder der Haltestrom-Wert in Abhängigkeit der Betriebskennwerte festgelegt bzw. angepasst werden.

Wenn als Betriebsparameter die Ansteuerungsfrequenz von der Dosierpumpe und/oder dem Injektor verändert wird, ist damit gemeint, dass bspw. festgelegt wird, ob beispielsweise eine Vielzahl von kleinen bzw. kurzen Förderhüben bzw. Injektoröffnungszeiten oder eine geringere Anzahl an größeren Förderhüben bzw. längeren Injektoröffnungszeiten erfolgen soll. Wenn sich aufgrund der Betriebskennwerte aus Schritt b.1) ergibt, dass das Reaktionsvermögen der Dosiervorrichtung (bzw. des Injektors und/oder der Dosierpumpe) verschlechtert ist, kann die Ansteuerungsfrequenz reduziert werden. Dann wird zur Bereitstellung der gleichen Dosiermenge in einem bestimmten Zeitintervall nur noch eine geringe Anzahl von Dosiervorgängen mit einer jeweils erhöhten Dosiermenge durchgeführt.

Das Verfahren ist vorteilhaft, wenn in Schritt b.2) der Betriebskennwert mit zumindest einem Referenzwert verglichen wird und in Abhängigkeit dieses Vergleiches zumindest eine Betriebsfunktion der Betriebsweise aus einer Mehrzahl von vorgegebenen Betriebsfunktionen ausgewählt wird.

Vorzugsweise liegt eine Tabelle bzw. ein Kennfeld an Referenzwerten bzw. an Referenzwertbereichen vor. Für vorgegebene Referenzwerte bzw. für vorgegebene Referenzwertbereiche ist bevorzugt eine (einzige) Betriebsfunktion vorbestimmt. Wenn der Betriebskennwert einen solchen (neuen) Referenzwert bzw. Referenzwertbereich erreicht, wird die hierzu gehörende zumindest eine Betriebsfunktion (neu) ausgewählt.

Das Verfahren ist auch vorteilhaft, wenn für einen Schritt b.3) eine Wiederholungsanzahl festgelegt wird, wobei das Verfahren so lange mit Schritten a) und c) ausgeführt und jeweils in Schritt b.3) ein Zähler erhöht wird, bis der Zähler die Wiederholungsanzahl erreicht hat und dann die Schritte b.1) und b.2) ausgeführt werden.

Der Verfahrensschritt b), umfassend die Verfahrensschritte b.1) bis b.2) wird demnach nicht jedesmal ausgeführt, wenn die Verfahrensschritte a) und c) ausgeführt werden. Damit können praktisch Adaptionsintervalle bzw. Adaptionszeitpunkte vorgegeben werden, um den Regelungsaufwand für dieses Verfahren gering zu halten.

Auch vorteilhaft ist das Verfahren, wenn die Wiederholungsanzahl in Abhängigkeit eines Betriebskennwertes festgelegt wird.

Betriebskennwerte sind hier auch die in Schritt b.1) des Verfahrens bestimmten Betriebskennwerte. Wenn beispielsweise die Anzahl der bisher erfolgten Dosiervorgänge, das Alter der Dosiervorrichtung und/oder die bisherige Betriebszeit der Dosiervorrichtung gering sind, ist es sinnvoll, die Wiederholungsanzahl für Schritt b.3) relativ niedrig anzusetzen, weil noch signifikante Veränderungen der Eigenschaften der Dosiervorrichtung auftreten können. Langfristig können sich die Eigenschaften der Dosiervorrichtung eingestellt haben und sich in Abhängigkeit der Betriebskennwerte nicht mehr sehr schnell verändern.

Gemäß einer Weiterbildung wird vorgeschlagen, dass die Dosiervorrichtung eine Förderpumpe und einen Injektor aufweist, und in Schritt c) die Dosiermengenvorgabe aus Schritt a) mit der Dosierpumpe und mit dem Injektor umgesetzt wird.

Eine solche kombinierte Dosiervorrichtung ist beispielsweise aus der deutschen Patentanmeldung DE 10 2010 049 071 der Anmelderin bekannt. Dort wird insbesondere erläutert, dass die Genauigkeit einer Dosierpumpe oft wesentlich höher als die Dosiergenauigkeit eines Injektors ist. Weiter wird dort berücksichtigt, dass bei Verwendung einer kostengünstigen Dosierpumpe die erreichbare Minimalmengenabgabe wesentlich größer ist als bei einem Injektor. Demnach kann es sinnvoll sein, sehr kleine Dosiermengen über den Injektor zu definieren und größere Dosiermengen über die Dosierpumpe. Diese kombinierte Strategie bei solchen Dosiervorrichtungen erlaubt einen kostengünstigen und genauen Betrieb.

Bei einer solchen Dosiervorrichtung kann die angeforderte Dosiermenge mit Hilfe des Injektors der Abgasbehandlungsvorrichtung zugeführt werden. Die Dosierpumpe wird dabei zeitweise wie eine (normale) Förderpumpe betrieben, um dem Injektor das Additiv mit einem definierten Druck zur Verfügung zu stellen. Dazu wir die Dosierpumpe über das Signal eines Drucksensors gesteuert, der den am Injektor anliegenden Druck überwacht. Aufgrund der Tatsache, dass es sich um eine Dosierpumpe handelt, kann allerdings genau bestimmt werden wie groß die Menge an Additiv, welche die Dosierpumpe passiert hat, tatsächlich ist. So kann über mehrere Dosiervorgänge des Injektors hinweg die mit dem Injektor insgesamt dosierte Dosiermenge mit der Dosierpumpe überwacht werden, in dem die von dem Injektor bestimmte Dosiermenge und die von der Dosierpumpe bestimmte Dosiermenge miteinander verglichen werden. Verschiedene Betriebsfunktionen eines Betriebsalgorithmus für den Injektor können auf Grundlage dieser Überwachung bzw. auf Grundlage dieses Vergleiches dann angepasst werden.

Der Aufbau einer solchen kombinierten Dosiervorrichtung ist beispielsweise in der Figur 1 der DE 10 2010 049 071 und in der Beschreibung hierzu erläutert. Der Ablauf eines Dosierverfahrens, wie es mit einer solchen kombinierten Dosiervorrichtung durchgeführt werden kann, ist beispielsweise in den dortigen Patentansprüchen 1 bis 3 und der dazugehörigen Beschreibung erläutert.

Bei einer solchen kombinierten Dosiervorrichtung ist es besonders vorteilhaft, wenn in Verfahrensschritt b.2) eine Betriebsweise der Dosierpumpe festgelegt wird, und die Betriebsweise des Injektors in Verfahrensschritt b.2) nicht beeinflusst wird. Die Betriebsweise des Injektors wird bei einer kombinierten Dosiervorrichtung bereits aufgrund der Überwachung des Injektors mit der Dosierpumpe angepasst. Wenn in Verfahrensschritt b.2) nur die Betriebsweise des Dosierpumpe angepasst wird, wirkt dies durch die Überwachung des Injektors mit der Dosierpumpe gleichzeitig auch für den Injektor. So kann eine besonders gute Anpassung der Dosiervorrichtung an veränderte Betriebskennwerte mit einem besonders geringen technischen Aufwand erreicht werden.

Das Verfahren findet insbesondere Anwendung bei einem Kraftfahrzeug, aufweisend eine Verbrennungskraftmaschine, eine Abgasbehandlungsvorrichtung zur Reinigung der Abgase der Verbrennungskraftmaschine und eine Dosiervorrichtung zur Zugabe von Reduktionsmittel zur der Abgasbehandlungsvorrichtung sowie eine Kontrolleinheit, welche zur Durchführung des erfindungsgemäßen Verfahrens konzipiert und eingerichtet ist.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und die dargestellten Größenverhältnisse nur schematisch sind. Es zeigen:
- Fig. 1:: ein Kraftfahrzeug, aufweisend eine Dosiervorrichtung sowie eine Kontrolleinheit, welche dazu eingerichtet sind, die Dosiervorrichtung zu betreiben, und
- Fig. 2:: ein Ablaufdiagramm einer Ausführungsvariante des erfindungsgemäßen Verfahrens.

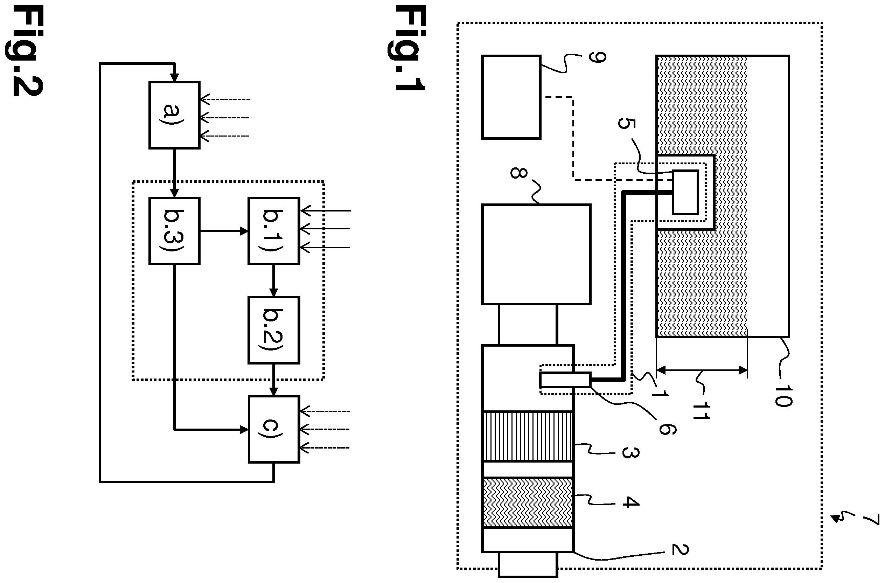

In Fig. 1 ist ein Kraftfahrzeug 7 dargestellt, welches eine Verbrennungskraftmaschine 8 und eine Abgasbehandlungsvorrichtung 2 zur Reinigung der Abgase der Verbrennungskraftmaschine 8 aufweist. In der Abgasbehandlungsvorrichtung 2 sind zur Reinigung der Abgase ein Katalysator 3 und ein Partikelabscheider 4 dargestellt. Es ist nicht erforderlich, dass in der Abgasbehandlungsvorrichtung genau ein Katalysator 3 und ein Partikelabscheider 4 vorhanden sind. Es sind beliebige Ausgestaltungen mit zumindest einem Partikelabscheider 4 und/oder zumindest einem Katalysator 3 möglich. Der Abgasbehandlungsvorrichtung 2 kann mit einer Dosiervorrichtung 1 ein Additiv (insbesondere eine Harnstoff-Wasser-Lösung) zugeführt werden. Die Dosiervorrichtung 1 ist an einem Tank 10 angeschlossen und entnimmt das Additiv aus diesem Tank 10. Der Tank 10 ist hier beispielhaft bis zum Füllstand 11 mit Additiv gefüllt. Die Dosiervorrichtung 1 weist eine Dosierpumpe 5 und einen Injektor 6 auf. Eine Dosiervorrichtung 1, die sowohl eine Dosierpumpe 5 als auch einen Injektor 6 aufweist ist nur eine Ausführungsvariante. Die Dosiervorrichtung kann wahlweise anstatt des Injektors 6 eine passive Einspritzvorrichtung, wie beispielsweise ein selbstöffnendes Ventil und/oder eine Düse aufweisen. Weiterhin kann anstatt der Dosierpumpe 5 eine reine Förderpumpe ohne Dosierfunktion vorgesehen sein. Die Dosiervorrichtung 1 wird von einer Kontrolleinheit 9 gesteuert, wobei diese separat oder als Teil einer Motorsteuerung des Kraftfahrzeugs ausgeführt sein kann.

In Fig. 2 ist ein Verfahrensdiagramm eines Ausführungsbeispiels des erfindungsgemäßen Verfahrens dargestellt. Zu erkennen sind die Verfahrensschritte a), b) und c), welche nach Art einer Schleife regelmäßig wiederholt ausgeführt werden. Der Verfahrensschritt b) gliedert sich in die Verfahrensschritte b.1), b.2) und b.3). Der Verfahrensschritt b.3) wird bei jedem Ablauf des Verfahrens durchgeführt. Im Rahmen des Verfahrensschritts b.3) wird ein Zähler erhöht. Jeweils, wenn der Zähler in Schritt b.3) eine Wiederholungsanzahl erreicht, werden die Verfahrensschritte b.1) und b.2) ausgeführt. Bei Verfahrensschritt a) sind durch Pfeile Betriebsparameter einer Abgasbehandlungsvorrichtung und einer Verbrennungskraftmaschine angedeutet, die zur Festlegung der Dosiermenge verwendet werden können. Bei Verfahrensschritt c) sind durch Pfeile Betriebsparameter der Dosiervorrichtung angedeutet, die bei der Durchführung der in Schritt a) festgelegten Dosiermenge in Schritt c) berücksichtigt werden können. Bei Verfahrensschritt b.1) sind durch Pfeile Betriebskennwerte angedeutet, die zum Festlegen der Betriebsweise der Dosiervorrichtung in Schritt b.2) berücksichtigt werden können. Zur näheren Erläuterung der Aktionen innerhalb der Schritte sei auf die allgemeine Beschreibung weiter oben verwiesen.

Die vorliegende Erfindung erreicht, dass die im Zusammenhang mit dem Stand der Technik geschilderten technischen Probleme gelindert werden. Insbesondere kann mit dem erfindungsgemäßen Verfahren der Betrieb einer Dosiervorrichtung mit einer besonders hohen Dosiergenauigkeit erreicht werden. Dabei wurden die Störanfälligkeit und Komplexität gegenüber bekannten Dosierverfahren weiter reduziert. Ebenso ist gelungen, dass dieses Verfahren auf unterschiedliche Ausgestaltungen der Dosiervorrichtung anwendbar ist und ggf. auch über die Betriebsdauer eintretende Veränderungen berücksichtigt bzw. daran einfach angepasst werden kann.

### Bezugszeichenliste

- 1: Dosiervorrichtung
- 2: Abgasbehandlungsvorrichtung
- 3: Katalysator
- 4: Partikelabscheider
- 5: Förderpumpe
- 6: Injektor
- 7: Kraftfahrzeug
- 8: Verbrennungskraftmaschine
- 9: Kontrolleinheit
- 10: Tank
- 11: Füllstand

## Patentansprüche

1. Verfahren zum Betrieb einer Dosiervorrichtung (1) zur Zugabe eines Additivs hin zu einer Abgasbehandlungsvorrichtung (2), umfassend zumindest die folgenden Schritte:
a) Bestimmen einer von einer der Abgasbehandlungsvorrichtung (2) geforderten Dosiermenge des Additivs;
b) Bestimmen einer Betriebsweise zur Zuführung der geforderten Dosiermenge für die Dosiervorrichtung (1),
wobei zumindest folgende Teilschritte durchgeführt werden:
b.1) Bereitstellen mindestens eines Betriebskennwertes mindestens einer Komponente der Dosiervorrichtung (1), welcher für eine Alterung der Dosiervorrichtung (1) maßgeblich ist;
b.2) Festlegen einer Betriebsweise für die Dosiervorrichtung (1) in Abhängigkeit des Betriebskennwertes aus Schritt b.1);
c) Betreiben der Dosiervorrichtung (1) mit der festgelegten Betriebsweise, so dass die gemäß Schritt a) geforderte Dosiermenge der Abgasbehandlungsvorrichtung (2) zugeführt wird.

2. Verfahren nach Patentanspruch 1, wobei für den Betriebskennwert in Schritt b.1) zumindest einer der folgenden für die Alterung der Dosiervorrichtung (1) relevanten Parameter berücksichtigt wird:
- Anzahl der bislang erfolgten Dosiervorgänge,
- Alter der Dosiervorrichtung (1), und
- bisherige Betriebszeit der Dosiervorrichtung (1).

3. Verfahren nach einem der vorhergehenden Patentansprüche, wobei für den Betriebskennwert in Schritt b.1) zumindest eine Anzahl des Auftretens der folgenden für die Alterung der Dosiervorrichtung (1) relevanten Ereignisse berücksichtigt wird:
- Anzahl von Einfriervorgängen, denen die Dosiervorrichtung (1) ausgesetzt war,
- Anzahl von Notabschaltungen der Dosiervorrichtung (1),
- Anzahl von Heißabstellvorgängen einer an die Abgasbehandlungsvorrichtung (2) angeschlossenen Verbrennungskraftmaschine (8),
- Anzahl an Fehlbetankungen eines Tanks, aus welchem die Dosiervorrichtung (1) das Additiv entnimmt, und
- Anzahl an Phasen, in denen die Dosiervorrichtung (1) für länger als ein vorgegebenes Zeitintervall deaktiviert war.

4. Verfahren nach einem der vorhergehenden Patentansprüche, wobei für den Betriebskennwert in Schritt b.1) zumindest eine der folgenden Betriebsbedingungen berücksichtigt wird, welche während des Betriebs der Dosiervorrichtung (1) in zumindest einem vorgelagerten Zeitintervall vorlag:
- Lastbereich, in dem die Dosiervorrichtung (1) betrieben wurde, und
- Temperatur welche in der Dosiervorrichtung (1) vorlag.

5. Verfahren nach einem der vorhergehenden Patentansprüche, wobei in Schritt b.1) mindestens ein Betriebskennwert aus einem Speicher ausgelesen, wobei der mindestens eine Betriebskennwert im Speicher regelmäßig aktualisiert wird, wobei zumindest ein relevanter Parameter, zumindest ein relevantes Ereignis oder zumindest eine relevante Betriebsbedingung aus mindestens einem vorgelagerten Zeitintervall bei der Aktualisierung berücksichtigt wird.

6. Verfahren nach einem der vorhergehenden Patentansprüche, wobei in Schritt a) bei der Bestimmung der Dosiermenge zumindest einer der folgenden Betriebsparameter der Abgabehandlungsvorrichtung (2) berücksichtigt wird:
- Abgastemperatur,
- Abgaszusammensetzung,
- Abgasmassenstrom,
- Aktivität eines Katalysators (3) in der Abgasbehandlungsvorrichtung (2), und
- Beladung eines Partikelabscheiders (4) in der Abgasbehandlungsvorrichtung (2).

7. Verfahren nach einem der vorhergehenden Patentansprüche, wobei in Schritt a) bei der Bestimmung der Dosiermenge zumindest einer der folgenden Betriebsparameter einer an die Abgasbehandlungsvorrichtung (2) angeschlossenen Verbrennungskraftmaschine berücksichtigt wird:
- Drehmoment,
- Drehzahl,
- Leistungsabgabe, und
- Lambda-Wert.

8. Verfahren nach einem der vorhergehenden Patentansprüche, wobei in Schritt c) zumindest ein Betriebsparameter der Dosiervorrichtung aus der folgenden Gruppe berücksichtigt wird:
- Druck des Additivs in der Dosiervorrichtung (1),
- Füllstand (11) in einem Tank (10) der Dosiervorrichtung (1)
- Temperatur der Dosiervorrichtung (1), und
- Vibration der Dosiervorrichtung (1).

9. Verfahren nach einem der vorhergehenden Patentansprüche, wobei die in Schritt b.2) festgelegte Betriebsweise zumindest eine der folgenden Betriebsfunktionen umfasst, die den Betrieb einer Förderpumpe (5) oder eines Injektors (6) definieren und die in Abhängigkeit der Betriebskennwerte beeinflusst werden:
- Ansteuerungsstromprofil für die Förderpumpe (5);
- Ansteuerungsstromprofil für den Injektor (6);
- Ansteuerungsfrequenz für die Förderpumpe (5), und
- Ansteuerungsfrequenz für den Injektor (6).

10. Verfahren nach einem der vorhergehenden Patentansprüche, wobei in Schritt b.2) der Betriebskennwert mit zumindest einem Referenzwert verglichen wird und in Abhängigkeit dieses Vergleiches zumindest eine Betriebsfunktion der Betriebsweise aus einer Mehrzahl von vorgegebenen Betriebsfunktionen ausgewählt wird.

11. Verfahren nach einem der vorhergehenden Patentansprüche, wobei für einen Schritt b.3) eine Wiederholungsanzahl festgelegt wird, wobei das Verfahren so lange mit den Schritten a) und c) ausgeführt und jeweils in Schritt b.3) ein Zähler erhöht wird, bis der Zähler die Wiederholungsanzahl erreicht hat und dann die Schritte b.1) und b.2) ausgeführt werden.

12. Verfahren nach Patentanspruch 11, wobei die Wiederholungsanzahl in Abhängigkeit eines Betriebskennwertes festgelegt wird.

13. Verfahren nach einem der vorhergehenden Patentansprüche, wobei die Dosiervorrichtung (1) eine Dosierpumpe (5) und einen Injektor (6) aufweist, und in Schritt c) die Dosiermengenvorgabe aus Schritt a) mit der Dosierpumpe (4) und mit dem Injektor (5) umgesetzt wird.

14. Kraftfahrzeug (7), aufweisend eine Verbrennungskraftmaschine (8), eine Abgasbehandlungsvorrichtung (2) zur Reinigung der Abgase der Verbrennungskraftmaschine (8) und eine Dosiervorrichtung (1) zur Zugabe von Reduktionsmittel zur der Abgasbehandlungsvorrichtung (2) sowie eine Kontrolleinheit (9), welche zur Durchführung eines Verfahrens nach einem der vorhergehenden Patentansprüche konzipiert und eingerichtet ist.

## Claims

1. Method for operating a dosing device (1) for metering an additive to an exhaust-gas treatment device (2), comprising at least the following steps:
a) determining a dosing amount of the additive demanded by the exhaust-gas treatment device (2);
b) determining an operating mode for supplying the required dosing amount for the dosing device (1), wherein at least the following sub-steps are carried out:
b.1) providing at least one characteristic operating value of at least one component of the dosing device (1) which is definitive of a degree of aging of the dosing device (1);
b.2) setting an operating mode for the dosing device (1) in a manner dependent on the characteristic operating value from step b.1);
c) operating the dosing device (1) with the set operating mode such that the dosing amount demanded in accordance with step a) is supplied to the exhaust-gas treatment device (2).

2. Method according to Patent Claim 1, wherein, for the characteristic operating value in step b.1), consideration is given to at least one of the following parameters relevant to the aging of the dosing device (1):
- number of dosing processes that have hitherto been performed,
- age of the dosing device (1), and
- past operating duration of the dosing device (1).

3. Method according to either of the preceding patent claims, wherein, for the characteristic operating value in step b.1), consideration is given to at least a number of occurrences of the following events relevant to the aging of the dosing device (1):
- number of freezing processes to which the dosing device (1) has been subjected,
- number of emergency deactivations of the dosing device (1),
- number of hot shutdown processes of an internal combustion engine (8) which is connected to the exhaust-gas treatment device (2),
- number of instances of misfueling of a tank from which the dosing device (1) extracts the additive, and
- number of phases in which the dosing device (1) has been deactivated for longer than a predefined time interval.

4. Method according to one of the preceding patent claims, wherein, for the characteristic operating value in step b.1), consideration is given to at least one of the following operating conditions that has prevailed during the operation of the dosing device (1) in at least one prior time interval:
- load range in which the dosing device (1) has been operated, and
- temperature that prevailed in the dosing device (1).

5. Method according to one of the preceding patent claims, wherein, in step b.1), at least one characteristic operating value is read out from a memory, wherein the at least one characteristic operating value is updated in the memory at regular intervals, wherein, for the update, consideration is given to at least one relevant parameter, at least one relevant event or at least one relevant operating condition from at least one prior time interval.

6. Method according to one of the preceding patent claims, wherein, in step a), for the determination of the dosing amount, consideration is given to at least one of the following operating parameters of the exhaust-gas treatment device (2):
- exhaust-gas temperature,
- exhaust-gas composition,
- exhaust-gas mass flow rate,
- activity of a catalytic converter (3) in the exhaust-gas treatment device (2), and
- loading of a particle separator (4) in the exhaust-gas treatment device (2).

7. Method according to one of the preceding patent claims, wherein, in step a), for the determination of the dosing amount, consideration is given to at least one of the following operating parameters of an internal combustion engine which is connected to the exhaust-gas treatment device (2):
- torque,
- engine speed,
- power output, and
- lambda value.

8. Method according to one of the preceding patent claims, wherein, in step c), consideration is given to at least one operating parameter of the dosing device from the following group:
- pressure of the additive in the dosing device (1),
- fill level (11) in a tank (10) of the dosing device (1),
- temperature of the dosing device (1), and
- vibration of the dosing device (1).

9. Method according to one of the preceding patent claims, wherein the operating mode set in step b.2) comprises at least one of the following operating functions which define the operation of a delivery pump (5) or of an injector (6) and which are influenced in a manner dependent on the characteristic operating values:
- activation current profile for the delivery pump (5);
- activation current profile for the injector (6);
- activation frequency for the delivery pump (5), and
- activation frequency for the injector (6).

10. Method according to one of the preceding patent claims, wherein, in step b.2), the characteristic operating value is compared with at least one reference value, and at least one operating function of the operating mode is selected from a multiplicity of predefined operating functions in a manner dependent on said comparison.

11. Method according to one of the preceding patent claims, wherein, for a step b.3), a number of repetitions is set, wherein the method is executed with the steps a) and c), and a counter is increased in step b.3) in each case, until the counter has reached the number of repetitions, and then steps b.1) and b.2) are executed.

12. Method according to Patent Claim 11, wherein the number of repetitions is set in a manner dependent on a characteristic operating value.

13. Method according to one of the preceding patent claims, wherein the dosing device (1) has a dosing pump (5) and an injector (6), and, in step c), the set dosing amount from step a) is implemented by means of the dosing pump (4) and by means of the injector (5).

14. Motor vehicle (7), having an internal combustion engine (8) and having an exhaust-gas treatment device (2) for purifying the exhaust gases of the internal combustion engine (8) and having a dosing device (1) for metering reducing agent to the exhaust-gas treatment device (2), and also having a control unit (9) which is designed and set up to carry out a method according to one of the preceding patent claims.

## Revendications

1. Procédé pour faire fonctionner un dispositif de dosage (1) destiné à ajouter un additif à un dispositif de traitement de gaz d'échappement (2), comprenant au moins les étapes suivantes:
a) déterminer une quantité de dosage de l'additif requise par le dispositif de traitement de gaz d'échappement (2);
b) déterminer un mode de fonctionnement pour la fourniture de la quantité de dosage requise pour le dispositif de dosage (1),
dans lequel on exécute au moins les étapes partielles suivantes:
b.1) préparer au moins un paramètre caractéristique de fonctionnement d'au moins un composant du dispositif de dosage (1), qui est déterminant pour un vieillissement du dispositif de dosage (1);
b.2) définir un mode de fonctionnement pour le dispositif de dosage (1) en fonction du paramètre caractéristique de fonctionnement de l'étape b.1);
c) faire fonctionner le dispositif de dosage (1) avec le mode de fonctionnement défini, de telle manière que la quantité de dosage requise selon l'étape a) soit fournie au dispositif de traitement de gaz d'échappement (2).

2. Procédé selon la revendication 1, dans lequel on tient compte, pour le paramètre caractéristique de fonctionnement à l'étape b.1), d'au moins un des paramètres suivants importants pour le vieillissement du dispositif de dosage (1):
- nombre des opérations de dosage effectuées jusqu'à présent;
- âge du dispositif de dosage (1), et
- durée de fonctionnement actuelle du dispositif de dosage (1).

3. Procédé selon l'une quelconque des revendications précédentes, dans lequel on tient compte, pour le paramètre caractéristique de fonctionnement à l'étape b.1), au moins d'un nombre de survenances des événements suivants importants pour le vieillissement du dispositif de dosage (1):
- nombre d'opérations de congélation, auxquelles le dispositif de dosage (1) a été soumis,
- nombre de coupures d'urgence du dispositif de dosage (1),
- nombre d'opérations d'arrêt à chaud d'un moteur à combustion interne (8) raccordé au dispositif de traitement de gaz d'échappement (2),
- nombre de défauts de remplissage d'un réservoir, dans lequel le dispositif de dosage (1) prélève l'additif, et
- nombre de phases, dans lesquelles le dispositif de dosage (1) a été désactivé pendant un temps plus long qu'un intervalle de temps prédéterminé.

4. Procédé selon l'une quelconque des revendications précédentes, dans lequel on tient compte, pour le paramètre caractéristique de fonctionnement à l'étape b.1), d'au moins une des conditions de fonctionnement suivantes, qui était présente pendant le fonctionnement du dispositif de dosage (1) dans au moins un intervalle de temps précédent:
- plage de charge, dans laquelle le dispositif de dosage (1) a fonctionné, et
- température régnant dans le dispositif de dosage (1).

5. Procédé selon l'une quelconque des revendications précédentes, dans lequel on lit à l'étape b.1) au moins un paramètre caractéristique de fonctionnement dans une mémoire, dans lequel ledit au moins un paramètre caractéristique de fonctionnement est régulièrement actualisé dans la mémoire, dans lequel on tient compte, lors de l'actualisation, d'au moins un paramètre important, d'au moins un événement important ou d'au moins une condition de fonctionnement importante d'au moins un intervalle de temps précédent.

6. Procédé selon l'une quelconque des revendications précédentes, dans lequel on tient compte à l'étape a), lors de la détermination de la quantité de dosage, d'au moins un des paramètres de fonctionnement suivants du dispositif de traitement de gaz d'échappement (2):
- température des gaz d'échappement,
- composition des gaz d'échappement,
- débit massique des gaz d'échappement,
- activité d'un catalyseur (3) dans le dispositif de traitement de gaz d'échappement (2), et
- chargement d'un séparateur de particules (4) dans le dispositif de traitement de gaz d'échappement (2).

7. Procédé selon l'une quelconque des revendications précédentes, dans lequel on tient compte à l'étape a), lors de la détermination de la quantité de dosage, d'au moins un des paramètres de fonctionnement d'un moteur à combustion interne raccordé au dispositif de traitement de gaz d'échappement (2):
- couple de rotation,
- vitesse de rotation,
- puissance fournie, et
- valeur lambda.

8. Procédé selon l'une quelconque des revendications précédentes, dans lequel on tient compte à l'étape c) d'au moins un paramètre de fonctionnement du dispositif de dosage dans le groupe suivant:
- pression de l'additif dans le dispositif de dosage (1),
- niveau de remplissage (11) dans un réservoir (10) du dispositif de dosage (1),
- température du dispositif de dosage (1), et
- vibration du dispositif de dosage (1).

9. Procédé selon l'une quelconque des revendications précédentes, dans lequel le mode de fonctionnement défini à l'étape b.2) comprend au moins une des fonctions suivantes, qui définissent le fonctionnement d'une pompe d'alimentation (5) ou d'un injecteur (6) et qui sont influencées en fonction des paramètres caractéristiques de fonctionnement:
- profil de courant de démarrage pour la pompe d'alimentation (5) ;
- profil de courant de démarrage pour l'injecteur (6);
- fréquence de démarrage pour la pompe d'alimentation (5), et
- fréquence de démarrage pour l'injecteur (6).

10. Procédé selon l'une quelconque des revendications précédentes, dans lequel on compare à l'étape b.2) le paramètre caractéristique de fonctionnement avec au moins une valeur de référence et on sélectionne, en fonction de cette comparaison, au moins une fonction de fonctionnement du mode de fonctionnement parmi une multiplicité de fonctions de fonctionnement prédéterminées.

11. Procédé selon l'une quelconque des revendications précédentes, dans lequel on fixe pour une étape b.3) un nombre de répétitions, dans lequel le procédé est exécuté avec les étapes a) à c) et un compteur est accru chaque fois à l'étape b.3), jusqu'à ce que le compteur ait atteint le nombre de répétitions et on exécute alors les étapes b.1) et b.2).

12. Procédé selon la revendication 11, dans lequel le nombre de répétitions est fixé en fonction d'un paramètre caractéristique.

13. Procédé selon l'une quelconque des revendications précédentes, dans lequel le dispositif de dosage (1) présente une pompe de dosage (5) et un injecteur (6), et à l'étape c) l'instruction de quantité de dosage de l'étape a) est inversée avec la pompe de dosage (4) et avec l'injecteur (5).

14. Véhicule à moteur (7), présentant un moteur à combustion interne (8), un dispositif de traitement de gaz d'échappement (2) pour l'épuration des gaz d'échappement du moteur à combustion interne (8) et un dispositif de dosage (1) pour l'ajout d'agent de réduction au dispositif de traitement de gaz d'échappement (2) ainsi qu'une unité de contrôle (9), qui est conçue et configurée en vue de l'exécution d'un procédé selon l'une quelconque des revendications précédentes.
